# EUROPEAN PATENT APPLICATION

(11) **EP 1 850 235 A1**
(43) Date of publication of application: **31.10.2007**
(21) Application number: 06712734.0
(22) Date of filing: 31.01.2006
(51) Int. Cl.: G06F 13/00, H04L 29/10

(54) **COMMUNICATION CONTROL DEVICE**

(30) Priority: 18.02.2005 JP 2005042755; 29.08.2005 JP 2005248482
(71) Applicant: Duaxes Corporation, Tokyo 100-6014 (JP)
(72) Inventor: NAGOYA, Mitsugu, Tokyo, 1730003 (JP); SUZUKI, Atsushi, wa, 2240035 (JP)
(74) Representative: Palmer, Jonathan R.
(86) International application number: PCT/JP2006/301591
(87) International publication number: WO 2006/087907

(57) **Abstract**

The present invention provides a technique for outputting an appropriate message in response to a request for access to a content or a service. A communication control apparatus 10 receives a packet for requesting access to a content or a service and determines whether or not the access should be permitted. If the access is prohibited, the communication control apparatus 10 will instruct a message output server 130 to output a message such as an error message. A message retaining unit 132 retains a message to be output to an access request source, with respect to each user of access request source, or each URL or each category of contents to be accessed. A registration acceptance unit 135 accepts message registration and instructs a charging unit 136 to charge a registration fee. The charging unit 136 then performs processing for deducting the registration fee from the registrant's account. A message output unit 131 acquires from the communication control apparatus 10 an ID of a user who has sent an access request, and the unit then refers to the message retaining unit 132 to output a message set for the user.

## Description

### [Technical Field]

The present invention relates to a communication control technique, particularly to a communication control apparatus for outputting a message to the originator of an access request.

### [Background Art]

Due to improved Internet infrastructures and the widespread of communication terminals, such as cellular phone terminals, personal computers, and VoIP (Voice over Internet Protocol) phone sets, the number of Internet users is now exploding. Under such circumstances, security problems such as computer viruses, hacking and spam mails have become apparent, requiring appropriate techniques for communication control.

The Internet has enabled easy access to a vast amount of information. On the other hand, harmful information is proliferating thereon and regulation on its originator does not keep up with the proliferation. To provide an environment where everyone can use the Internet safely and effectively, there is required an appropriate technique for controlling access to harmful contents.

For example, there has been proposed an access control technique in which are prepared databases containing lists of sites to which access is permitted or prohibited, forbidden keywords or useful keywords, so as to control access to external information via the Internet with reference to such databases (see Patent Document 1, for example).
[Patent Document 1] Japanese Patent Application Laid-open No. 2001-282797.

### [Disclosure of Invention]

### [Problem to be Solved by the Invention]

The inventors have conceived of a technique in which, when access is prohibited or permitted in such access control as stated above, an appropriate message is output to the user who has requested the access. The inventors have also conceived of a technique for enabling flexible setting of the message, and a useful business model using such technique.

The present invention has been made in view of such situation, and a general purpose thereof is to provide a technique for outputting an appropriate message in response to a request for access to a content.

### [Means for Solving the Problem]

One aspect of the present invention relates to a communication control apparatus. The communication control apparatus comprises: a message retaining unit which relates and stores an address of a content stored in a position accessible via a network, and a message to be output to a request source which requests access to the content; a search unit which acquires communication data for requesting access to the content and searches the communication data for the address; and a message output unit which, when the address is included in the communication data, retrieves a message related to the address from the message retaining unit and outputs the message.

The message retaining unit may relate and store an address of a content to which access is prohibited or permitted, and a message to be output to a request source which requests access to the content. For example, to a user who has requested access to a content to which access is prohibited, a message for conveying the access prohibition may be output or an alternative content may be provided. To a user who has requested access to a content to which access is permitted, on the other hand, advertisement associated with the content may be output.

The message retaining unit may classify the content as one of multiple categories, and retain, with respect to each of the categories, a message to be output to a request source which requests access to a content belonging to the category.

The communication control apparatus may further comprise a user database which stores information for identifying a user. The search unit may compare information, included in the communication data, for specifying the originator of the communication data, with information for identifying the user registered in the user database, in order to search the user database for the originator. The message output unit may then output the message when the originator is a user registered in the user database. The message retaining unit may retain, with respect to each of the users, a message which is output when the user requests access to the content. A content associated with a user may be output separately, or it may be output with a message regarding access control. Also, messages to be output to users may be determined in advance by the users themselves, or may be provided by third parties including advertising business owners.

The communication control apparatus may further comprise: a registration acceptance unit which accepts registration of the message and registers the message in the message retaining unit; and a charging unit which charges a fee in consideration of the registration of the message.
The charging unit may charge a fee to the request source or request destination of the access, upon the message output unit outputting a message.

The communication control apparatus may further comprise: a history retaining unit which retains a history of output of the message; and an evaluation unit which evaluates a history of message output retained in the history retaining unit. When the number of access requests transmitted from the same access request source exceeds a predetermined number, the evaluation unit may identify the access request source and instruct the message output unit to output a message to the access request source.

The communication control apparatus may further comprise an antenna for transmitting to or receiving from a mobile communication terminal a signal via wireless communication. Accordingly, the communication data may be received from the mobile communication terminal via the antenna, and the message may be transmitted to the mobile communication terminal via the antenna.

Optional combinations of the aforementioned constituting elements, and implementations of the invention in the form of methods, apparatuses, systems, recording mediums and computer programs may also be practiced as additional modes of the present invention.

### [Advantageous Effects]

The present invention provides a technique for outputting an appropriate message in response to a request for access to a content.

### [Brief Description of the Drawings]

FIG. 1 is a diagram that shows a configuration of a communication control system according to a base technology.
FIG. 2 is a diagram that shows a configuration of a conventional communication control apparatus.
FIG. 3 is a diagram that shows a configuration of a communication control apparatus according to the base technology.
FIG. 4 is a diagram that shows an internal configuration of a packet processing circuit.
FIG. 5 is a diagram that shows an internal configuration of a position detection circuit.
FIG. 6 is a diagram that shows an example of internal data of a first database.
FIG. 7 is a diagram that shows another example of internal data of the first database.
FIG. 8 is a diagram that shows yet another example of internal data of the first database.
FIG. 9 is a diagram that shows a configuration of comparison circuits included in a binary search circuit.
FIG. 10 is a diagram that shows an example of internal data of a second database.
FIG. 11 is a diagram that shows another example of internal data of the second database.
FIG. 12 is a diagram that shows another illustrative configuration of the communication control apparatus according to the base technology.
FIG. 13 is a diagram that shows an internal configuration of the packet processing circuit used for URL filtering.
FIG. 14A is a diagram that shows an example of internal data of a virus/phishing site list; FIG. 14B is a diagram that shows an example of internal data of a whitelist; and
FIG. 14C is a diagram that shows an example of internal data of a blacklist.
FIG. 15 is a diagram that shows an example of internal data of a common category list.
FIGS. 16A, 16B, 16C and 16D are diagrams that show examples of internal data of the second database.
FIG. 17 is a diagram that shows the priorities of the virus/phishing site list, whitelist, blacklist and common category list.
FIG. 18 is a diagram that shows a configuration of a message output server according to an embodiment.
FIG. 19 is a diagram that shows an illustrative arrangement of a communication control system according to the embodiment.
FIG. 20 is a diagram that shows another illustrative arrangement of the communication control system according to the embodiment.
FIG. 21 is a diagram that shows yet another illustrative arrangement of the communication control system according to the embodiment.
FIG. 22 is a diagram that shows still yet another illustrative arrangement of the communication control system according to the embodiment.
FIG. 23 is a diagram that shows still yet another illustrative arrangement of the communication control system according to the embodiment.
FIG. 24 is a diagram that shows a further illustrative arrangement of the communication control system according to the embodiment.

### [Explanation of Reference Numerals]

- 10: communication control apparatus
- 12: communication control unit
- 14: switch control unit
- 20: packet processing circuit
- 30: search circuit
- 32: position detection circuit
- 33: comparison circuit
- 34: index circuit
- 35: comparison circuit
- 36: binary search circuit
- 40: process execution circuit
- 50: first database
- 57: user database
- 60: second database
- 100: communication control system
- 110: operation monitoring server
- 111: management table
- 120: connection management server
- 130: message output server
- 131: message output unit
- 132: message retaining unit
- 133: history retaining unit
- 134: evaluation unit
- 135: registration acceptance unit
- 136: charging unit
- 140: log management server
- 150: database server
- 160: URL database
- 161: virus/phishing site list
- 162: whitelist
- 163: blacklist
- 164: common category list
- 250: web server
- 260: cellular phone terminal
- 262: base station apparatus
- 264: control station apparatus
- 272: access point
- 274, 282 or 284: router apparatus

### [Best Mode for Carrying Out the Invention]

### (Base technology)

First, as a base technology, a communication control apparatus, configurations of its peripheral apparatuses, and the outline of the operation will be described. Thereafter, there will be described a URL filtering technique using the communication control apparatus, before, as an embodiment, a technique for outputting a message to the originator of an access request will be described.

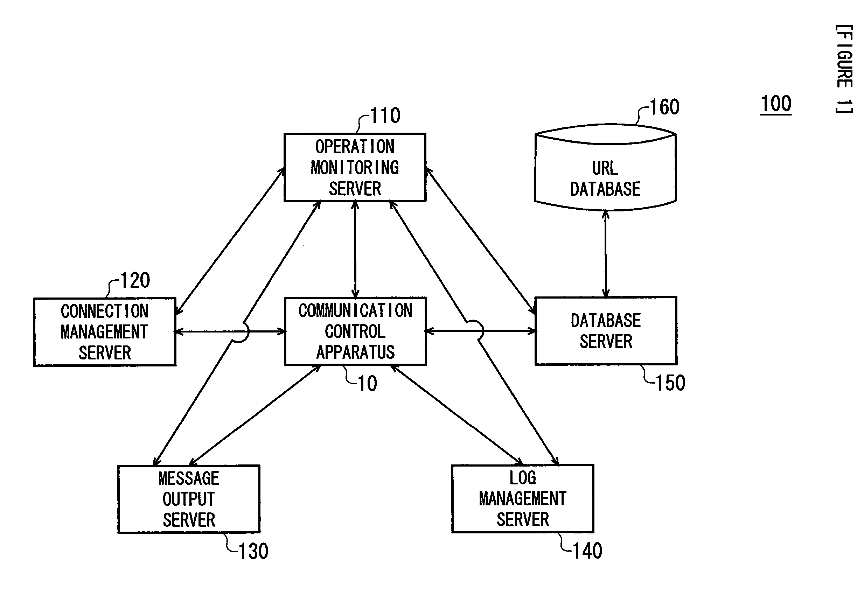

FIG. 1 shows a configuration of a communication control system according to the base technology. A communication control system 100 comprises a communication control apparatus 10 and various peripheral apparatuses provided to support the operation of the communication control apparatus 10. The communication control apparatus 10 of the base technology performs a URL filtering function provided by an Internet service provider or the like. The communication control apparatus 10 provided on a network path acquires a request for access to a content, analyzes the content, and determines whether or not the access to the content should be permitted. If the access to the content is permitted, the communication control apparatus 10 will transmit the access request to a server that retains the content. If the access to the content is prohibited, the communication control apparatus 10 will discard the access request and return a warning message or the like to the source of the request. The communication control apparatus 10 of the base technology receives an access request, such as an HTTP (HyperText Transfer Protocol) "GET" request message. The apparatus then searches a list of reference data for determining access permission to check if the URL of the content to be accessed appears in the list, so as to determine whether or not the access to the content should be permitted.

The peripheral apparatuses include an operation monitoring server 110, a connection management server 120, a message output server 130, a log management server 140 and a database server 150. The connection management server 120 manages connection to the communication control apparatus 10. When the communication control apparatus 10 processes a packet transmitted from a cellular phone terminal, for example, the connection management server 120 authenticates the user as a user of the communication control apparatus 10, based on information included in the packet, which uniquely identifies the cellular phone terminal. Once the user is authenticated, packets transmitted from the IP address, which is temporarily provided for the cellular phone terminal, will be transmitted to the communication control apparatus 10 and processed therein, without being authenticated by the connection management server 120 during a certain period. The message output server 130 outputs a message to the destination or the source of an access request, according to whether the communication control apparatus 10 has permitted the access. The log management server 140 manages the operating history of the communication control apparatus 10. The database server 150 acquires the latest database from a URL database 160 and provides the database to the communication control apparatus 10. To update the database without halting the operation of the communication control apparatus 10, the apparatus may possess a backup database. The operation monitoring server 110 monitors the operating status of the communication control apparatus 10 and its peripheral apparatuses including the connection management server 120, message output server 130, log management server 140 and database server 150. The operation monitoring server 110 has the highest priority in the communication control system 100 and performs supervisory control of the communication control apparatus 10 and all the peripheral apparatuses. The communication control apparatus 10 is configured with a dedicated hardware circuit, as will be described later. By inputting to or outputting from the communication control apparatus 10 the data for monitoring by means of a boundary-scan circuit, based on the technique described in Japanese Patent No. 3041340 filed by the present applicant or other techniques, the operation monitoring server 110 can monitor the operating status even while the communication control apparatus 10 is in operation.

In the communication control system 100 of the base technology, as will be described below, the communication control apparatus 10, configured with a dedicated hardware circuit for faster operation, is controlled by using a group of peripheral servers connected thereto and having various functions. Accordingly, by suitably replacing the software of the group of servers, a wide variety of functions can be achieved with a similar configuration. Thus, the base technology provides such communication control system having high flexibility.

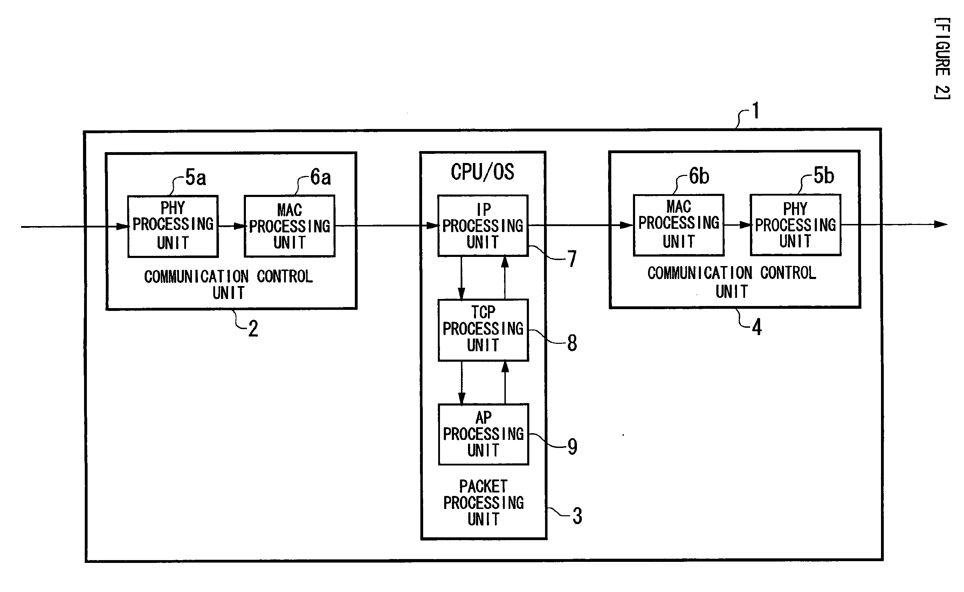

FIG. 2 shows a configuration of a conventional communication control apparatus 1. The conventional communication control apparatus 1 comprises a communication control unit 2 on the receiving side, a packet processing unit 3, and a communication control unit 4 on the sending side. The communication control units 2 and 4 include PHY processing units 5a and 5b for performing physical layer processing of packets, and MAC processing units 6a and 6b for performing MAC layer processing of packets, respectively. The packet processing unit 3 includes protocol processing units for performing protocol-specific processing, such as an IP processing unit 7 for performing IP (Internet Protocol) processing and a TCP processing unit 8 for performing TCP (Transport Control Protocol) processing. The packet processing unit 3 also includes an AP processing unit 9 for performing application layer processing. The AP processing unit 9 performs filtering or other processing according to data included in a packet.

The packet processing unit 3 of the conventional communication control apparatus 1 is implemented by software, using a general-purpose processor, or CPU, and an OS running on the CPU. With such configuration, however, the performance of the communication control apparatus 1 depends on the performance of the CPU, hampering the creation of a communication control apparatus capable of high-speed processing of a large volume of packets. For example, a 64-bit CPU can process only up to 64 bits at a time, and hence, there has existed no communication control apparatus having a higher performance than this. In addition, since the conventional communication control apparatus is predicated on the presence of an OS with versatile functionality, the possibility of security holes cannot be eliminated completely, requiring maintenance work including OS upgrades.

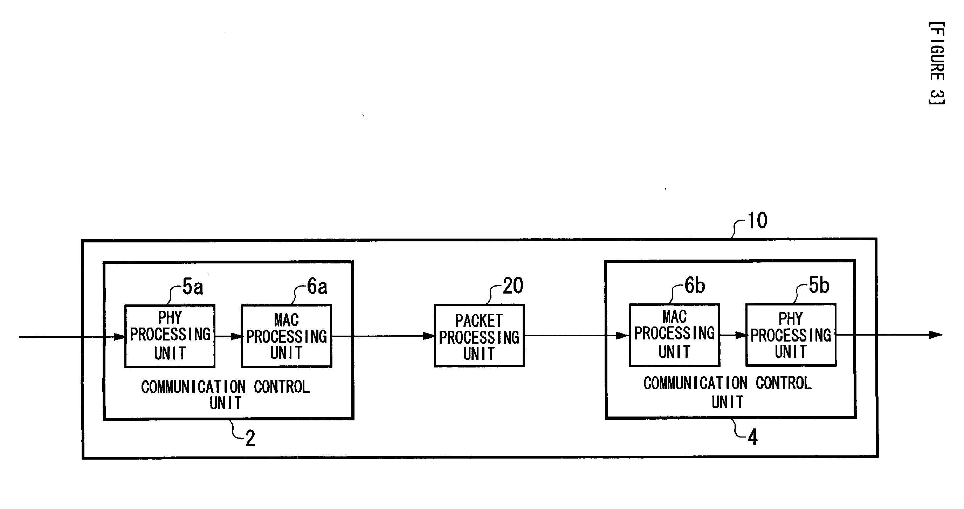

FIG. 3 shows a configuration of a communication control apparatus in the base technology. The communication control apparatus 10 comprises a packet processing circuit 20 configured with dedicated hardware employing a wired logic circuit, instead of the packet processing unit 3 implemented by software including a CPU and an OS in the conventional communication control apparatus 1 shown in FIG. 2. By providing a dedicated hardware circuit to process communication data, rather than processing it with an OS and software running on a general-purpose processing circuit such as CPU, the performance limitations posed by the CPU or OS can be overcome, enabling a communication control apparatus having high throughput.

For example, a case will be considered here in which, in packet filtering or the like, a search is conducted to check if the data in a packet includes reference data, which serves as criteria for filtering. When a CPU is used to compare the communication data with the reference data, there occurs a problem in that, since only 64-bit data can be compared at a time, the processing speed cannot be improved beyond such CPU performance. Since the CPU needs to repeat the process of loading 64 bits of communication data into a memory and comparing it with the reference data, the memory load time becomes a bottleneck which limits the processing speed.

In the base technology, by contrast, a dedicated hardware circuit configured with a wired logic circuit is provided to compare communication data with reference data. This circuit includes multiple comparators arranged in parallel, so as to enable the comparison of data having a length greater than 64 bits, such as 1024 bits. By providing dedicated hardware in such manner, bit matching can be simultaneously performed on a large number of bits in parallel. Since 1024-bit data can be processed at a time, while the conventional communication control apparatus 1 using a CPU processes only 64 bits, the processing speed can be improved remarkably. Increasing the number of comparators will improve the throughput, but also increase the cost and size of the apparatus. Accordingly, an optimal hardware circuit may be designed in accordance with the desired performance, cost or size. The dedicated hardware circuit may be configured using FPGA (Field Programmable Gate Array), etc.

Since the communication control apparatus 10 of the base technology is configured with dedicated hardware employing a wired logic circuit, it does not require any OS (Operating System). This can eliminate the need for the installation, bug fixes, or version upgrades of an OS, thereby reducing the cost and man-hours required for administration and maintenance. Also, unlike CPUs requiring versatile functionality, the communication control apparatus 10 does not include any unnecessary functions or use needless resources, and hence, reduced cost, a smaller circuit area or improved processing speed can be expected. Furthermore, again unlike conventional OS-based communication control apparatuses, the absence of unnecessary functions decreases the possibility of security holes and thus enhances the tolerance against attacks from malicious third parties over a network.

The conventional communication control apparatus 1 processes packets using software predicated on a CPU and an OS. Therefore, all packet data needs to be received before protocol processing is performed, and then the data is passed to an application. In contrast, since packet processing is performed by a dedicated hardware circuit in the communication control apparatus 10 of the base technology, all packet data needs not be received before starting the processing. Upon reception of necessary data, the processing can be started at any given point in time without waiting for the reception of subsequent data. For example, position detection processing in a position detection circuit, which will be described later, may be started at the time when position identification data for identifying the position of comparison target data is received. Thus, various types of processing can be performed in parallel without waiting for the reception of all data, reducing the time required to process packet data.

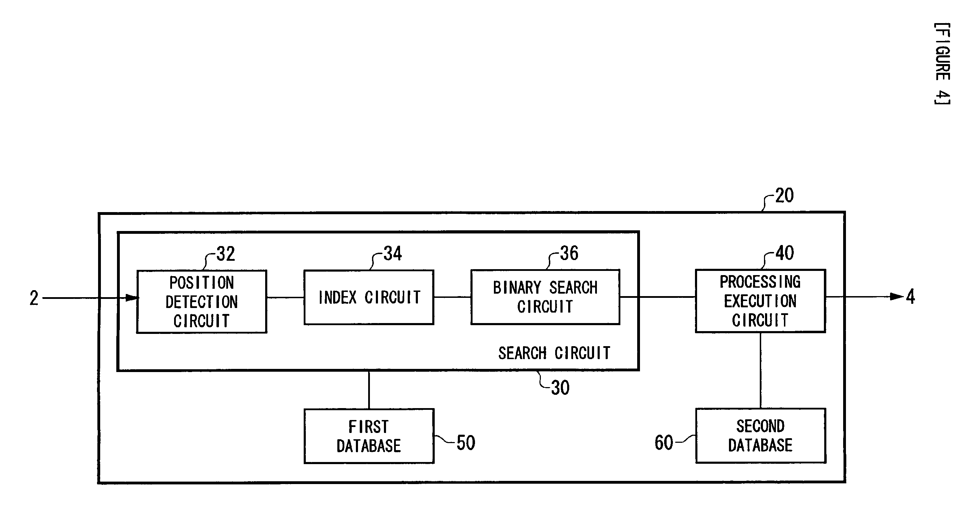

FIG. 4 shows an internal configuration of the packet processing circuit. The packet processing circuit 20 comprises: a first database 50 for storing reference data to be referred to when determining processing to be performed on communication data; a search circuit 30 for searching received communication data for the reference data by comparing the two; a second database 60 for storing a search result of the search circuit 30 and a content of processing to be performed on the communication data, which are related to each other; and a process execution circuit 40 for processing the communication data based on the search result of the search circuit 30 and the conditions stored in the second database 60.

The search circuit 30 includes: a position detection circuit 32 for detecting the position of comparison target data, which is to be compared with reference data, in communication data; an index circuit 34 which serves as an example of a determination circuit for determining which range the comparison target data belongs to, among three or more ranges into which the reference data stored in the first database 50 is divided; and a binary search circuit 36 for searching the determined range for the reference data that matches the comparison target data. The reference data may be searched for the comparison target data using any search technique, and a binary search method is used in the base technology.

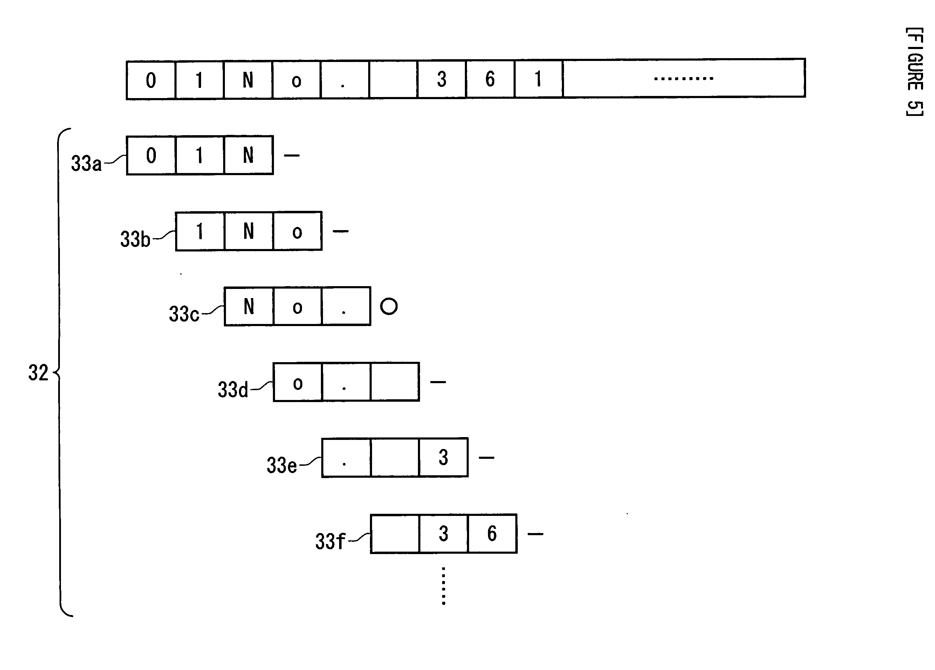

FIG. 5 shows an internal configuration of the position detection circuit. The position detection circuit 32 includes multiple comparison circuits 33a-33f which compare communication data with position identification data for identifying the position of comparison target data. While six comparison circuits 33a-33f are provided here, the number of comparison circuits may be arbitrary, as will be described later. To the comparison circuits 33a-33f are input pieces of communication data, with each piece shifted from the preceding one by a predetermined data length, such as 1 byte. These multiple comparison circuits 33a-33f then simultaneously compare the communication data with the position identification data to be detected in parallel.

The base technology will be described by way of example for explaining the operation of the communication control apparatus 10, in which a character string "No. ###" in communication data is detected, the number "###" included in the character string is then compared with reference data, and if the number matches the reference data, the packet will be allowed to pass, while, if they do not match, the packet will be discarded.

In the example of FIG. 5, communication data "01No. 361..." is input to the comparison circuits 33a-33f with a shift of one character each, and position identification data "No." for identifying the position of the number "###" is sought to be detected in the communication data. More specifically, "O1N" is input to the comparison circuit 33a, "1No" to the comparison circuit 33b, "No." to the comparison circuit 33c, "o. " to the comparison circuit 33d, ". 3" to the comparison circuit 33e, and " 36" to the comparison circuit 33f. Then, the comparison circuits 33a-33f simultaneously perform comparisons with the position identification data "No.". Consequently, there is found a match with the comparison circuit 33c, indicating that the character string "No." exists at the third character from the top of the communication data. Thus, it is determined that the numeral data as comparison target data exists subsequent to the position identification data "No." detected by the position detection circuit 32.

When the same processing is performed by a CPU, since the comparison process needs to be serially performed one by one from the top, such as comparing character strings "01N" and "No." before comparing "1No" and "No.", no improvement of detection speed can be expected. In the communication control apparatus 10 of the base technology, in contrast, providing the multiple comparison circuits 33a-33f in parallel enables simultaneous parallel comparison processing, which could not have been performed by a CPU, improving the processing speed significantly. Providing more comparison circuits will improve the detection speed, as more characters can be compared simultaneously. In consideration of cost or size, a sufficient number of comparison circuits may be provided to achieve a desired detection speed.

Aside from detecting position identification data, the position detection circuit 32 may also be used as a circuit for detecting character strings for various purposes. Moreover, the position detection circuit 32 may be configured to detect position identification data in units of bits, not just as a character string.

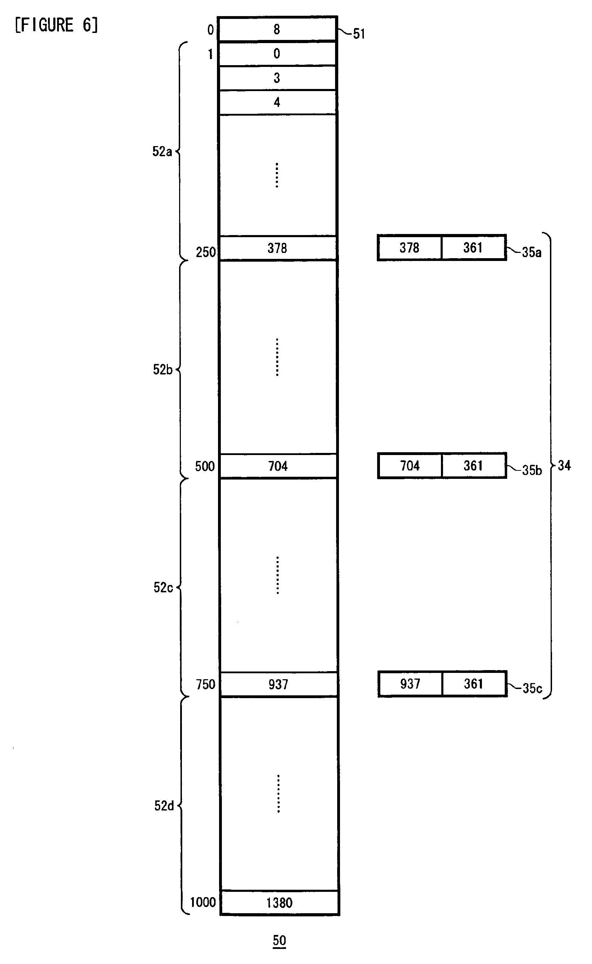

FIG. 6 shows an example of internal data of the first database. The first database 50 stores reference data to be referred to when determining the processing on packets, such as filtering, routing, switching, and replacement. The pieces of reference data are sorted according to some sort conditions. In the example of FIG. 6, 1000 pieces of reference data are stored.

The top record of the first database 50 contains an offset 51 which indicates the position of comparison target data in communication data. For example, in a TCP packet, the data configuration within the packet is determined in units of bits. Therefore, if the position of flag information or the like for determining the processing on the packet is given in the form of the offset 51, the processing can be determined by comparing only necessary bits, thus improving the processing efficiency. Also, even when the configuration of packet data is changed, it can be addressed by modifying the offset 51 accordingly. The first database 50 may store the data length of comparison target data. In this case, since the comparison can be performed by operating only a required number of comparators, the search efficiency can be improved.

The index circuit 34 determines which range the comparison target data belongs to, among three or more ranges, such as 52a-52d, into which reference data stored in the first database 50 is divided. In the example of FIG. 6, the 1000 pieces of reference data are divided into four ranges 52a-52d, i.e., 250 pieces each. The index circuit 34 includes multiple comparison circuits 35a-35c, each of which compares a piece of reference data at the border of the range with the comparison target data. Since the comparison circuits 35a-35c simultaneously compare the pieces of reference data at the borders with the comparison target data in parallel, which range the comparison target data belongs to can be determined by a single operation of comparison processing.

The pieces of reference data at the borders to be input to the comparison circuits 35a-35c of the index circuit 34 may be set by an apparatus provided outside the communication control apparatus 10. Alternatively, reference data at predetermined positions in the first database 50 may be set in advance to be input automatically as such. In the latter case, even when the first database 50 is updated, the reference data at the predetermined positions in the first database 50 are automatically input to the comparison circuits 35a-35c. Therefore, the communication control processing can be performed immediately without initialization or the like.

As mentioned previously, CPU-based binary search cannot make multiple comparisons at the same time. In the communication control apparatus 10 of the base technology, in contrast, providing the multiple comparison circuits 35a-35c in parallel enables simultaneous parallel comparison processing, with a significant improvement in the search speed.

After the index circuit 34 determines the relevant range, the binary search circuit 36 performs a search using a binary search method. The binary search circuit 36 divides the range determined by the index circuit 34 further into two and subsequently compares the piece of reference data lying at the border with the comparison target data, thereby determining which range the comparison target data belongs to. The binary search circuit 36 includes multiple comparison circuits for comparing, bit by bit, reference data with comparison target data. For example, in the base technology are provided 1024 comparison circuits to perform bit matching on 1024 bits simultaneously. When the range to which the comparison target data belongs is determined between the two split ranges, the determined range is further divided into two. Then, the reference data lying at the border is read out to be compared with the comparison target data. Thereafter, this processing is repeated to narrow the range further until reference data that matches the comparison target data is eventually found.

The operation will now be described in more detail in conjunction with the foregoing example. In the communication data shown in FIG. 5, the number "361" is the comparison target data that follows the position identification data "No.". Since a single space character intervenes between the position identification data "No." and the comparison target data "361", the offset 51 is set to "8" bits in order to exclude the space from the comparison target data. Accordingly, the binary search circuit 36 skips the first "8" bits, or 1 byte, of the communication data subsequent to the position identification data "No." and reads the following "361" as the comparison target data.

Each of the comparison circuits 35a-35c of the index circuit 34 receives "361" as comparison target data. As for reference data, the comparison circuit 35a receives "378", which lies at the border of the ranges 52a and 52b. Similarly, the comparison circuit 35b receives reference data "704" lying at the border of the ranges 52b and 52c, and the comparison circuit 35c receives reference data "937" lying at the border of the ranges 52c and 52d. The comparison circuits 35a-35c then perform comparisons simultaneously, determining that the comparison target data "361" belongs to the range 52a. Subsequently, the binary search circuit 36 searches the reference data for the comparison target data "361".

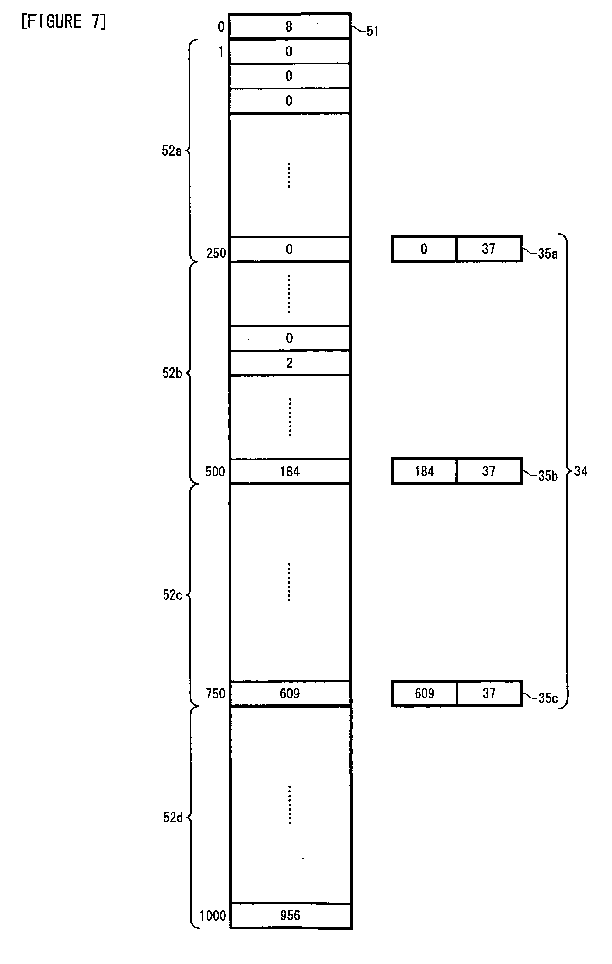

FIG. 7 shows another example of internal data of the first database. In the example shown in FIG. 7, the number of pieces of reference data is smaller than the number of pieces of data storable in the first database 50, i.e., 1000 in this case. In such instance, the first database 50 stores the pieces of reference data in descending order, starting with the last data position therein. Then, 0 is stored in the rest of the data positions. The database is loaded with data not from the top but from the bottom of the loading area, and all the vacancies occurring in the front of the loading area, if any, are replaced with zero. Consequently, the database is fully loaded at any time, so that the maximum time necessary for a binary search will be constant. Moreover, if the binary search circuit 36 reads reference data "0" during a search, the circuit can identify the range without making a comparison, as the comparison result is obvious, and can proceed to the next comparison. Consequently, the search speed can be improved.

In CPU-based software processing, the first database 50 stores pieces of reference data in ascending order, from the first data position therein. In the rest of data positions will be stored a maximum value or the like, and in such case, the skip of comparison processing as described above cannot be made during a binary search. The comparison technique described above can be implemented by configuring the search circuit 30 with a dedicated hardware circuit.

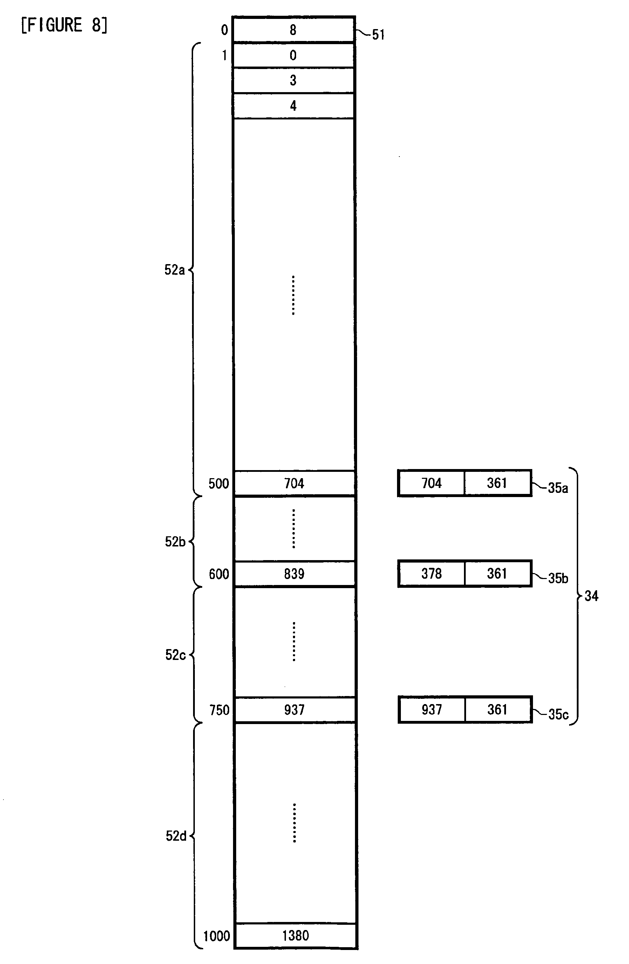

FIG. 8 shows yet another example of internal data of the first database. In the example shown in FIG. 8, the reference data is not evenly divided into three or more ranges, but unevenly divided into ranges that accommodate different numbers of pieces of data, such as 500 pieces in the range 52a and 100 pieces in the range 52b. These ranges may be determined depending on the distribution of frequencies with which reference data occurs in communication data. Specifically, the ranges may be determined so that the sums of the frequencies of occurrence of reference data belonging to the respective ranges are almost the same. Accordingly, the search efficiency can be improved. The reference data to be input to the comparison circuits 35a-35c of the index circuit 34 may be modifiable from the outside. In such case, the ranges can be dynamically set, so that the search efficiency will be optimized.

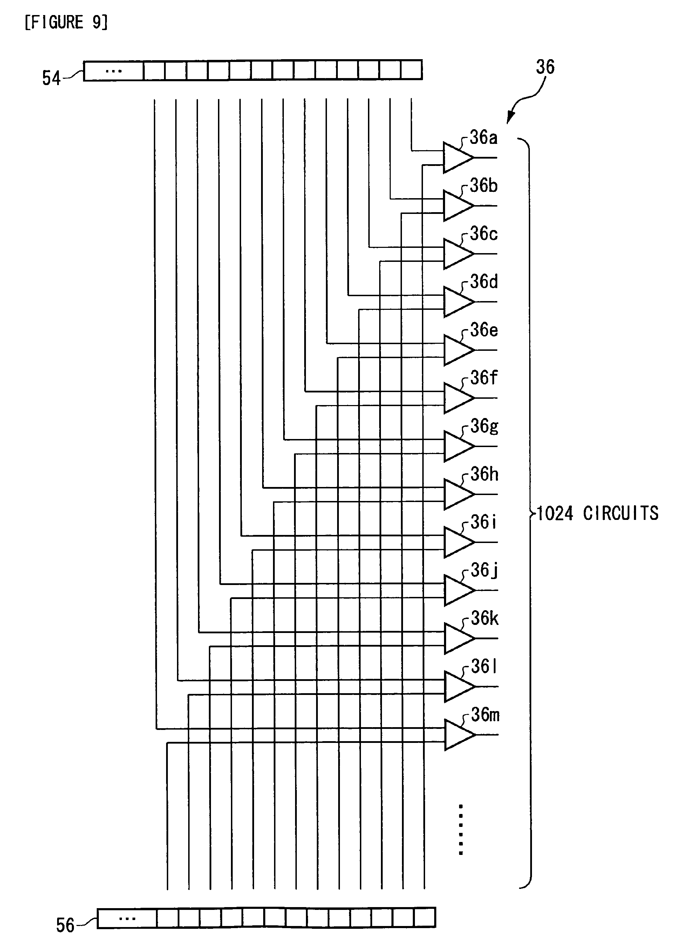

FIG. 9 shows a configuration of comparison circuits included in the binary search circuit. As mentioned previously, the binary search circuit 36 includes 1024 comparison circuits, such as 36a, 36b,.... Each of the comparison circuits 36a, 36b, etc. receives 1 bit of reference data 54 and 1 bit of comparison target data 56 to compare the bits in value. The comparison circuits 35a-35c of the index circuit 34 have similar internal configurations. Since the comparison processing is thus performed by a dedicated hardware circuit, a large number of comparison circuits can be operated in parallel to compare a large number of bits at a time, thereby speeding up the comparison processing.

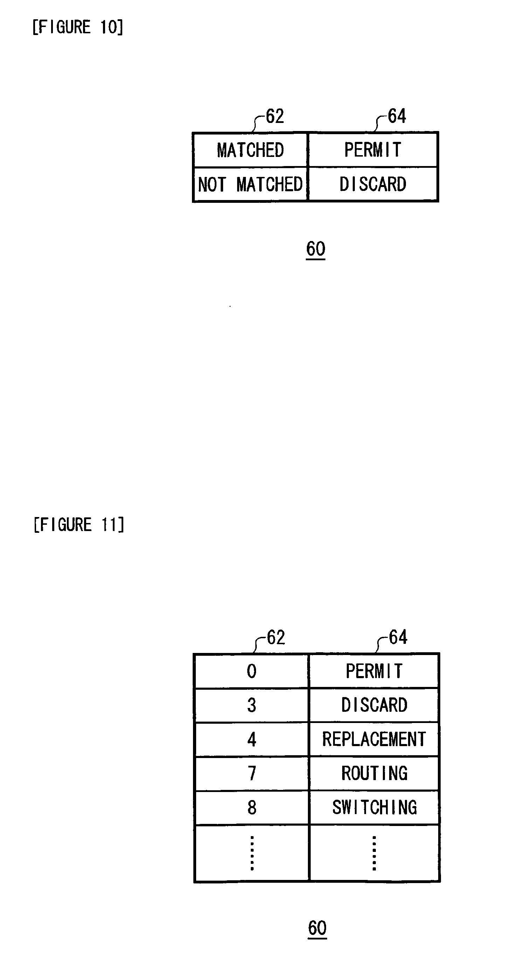

FIG. 10 shows an example of internal data of the second database. The second database 60 includes a search result field 62, which contains a search result of the search circuit 30, and a processing content field 64, which contains a processing content to be performed on communication data. The database stores the search results and the processing contents related to each other. In the example of FIG. 10, conditions are established such that a packet will be allowed to pass if its communication data contains reference data; if not, the packet will be discarded. The process execution circuit 40 searches the second database 60 for a processing content based on the search result and performs the processing on the communication data. The process execution circuit 40 may also be configured with a wired logic circuit.

FIG. 11 shows another example of internal data of the second database. In the example of FIG. 11, the processing content is set for each piece of reference data. With regard to packet replacement, replacement data may be stored in the second database 60. As for packet routing or switching, information on the route may be stored in the second database 60. The process execution circuit 40 performs processing, such as filtering, routing, switching, or replacement, which is specified in the second database 60, in accordance with the search result of the search circuit 30. When the processing content is set for each piece of reference data, as shown in FIG. 11, the first database 50 and the second database 60 may be merged with each other.

The first database and the second database are configured to be rewritable from the outside. By replacing these databases, various types of data processing and communication control can be achieved using the same communication control apparatus 10. Also, multistage search processing may be performed by providing two or more databases that store reference data to be searched. In such instance, more complicated conditional branching may be performed by providing two or more databases that store search results and processing contents related to each other. When multiple databases are thus provided to conduct multistage search, a plurality of the position detection circuits 32, the index circuits 34, the binary search circuits 36, etc. may also be provided.

The data intended for the foregoing comparison may be compressed by the same compression logic. If both the source data and the target data to be compared are compressed by the same method, the comparison can be performed in the same manner as usual, thus reducing the amount of data to be loaded for comparison. The smaller amount of data to be loaded can reduce the time required to read out the data from the memory, thereby reducing the overall processing time. Moreover, the number of comparators can be also reduced, which contributes to the miniaturization, weight saving, and cost reduction of the apparatus. The data intended for comparison may be stored in a compressed form, or may be read out from the memory and compressed before comparison.

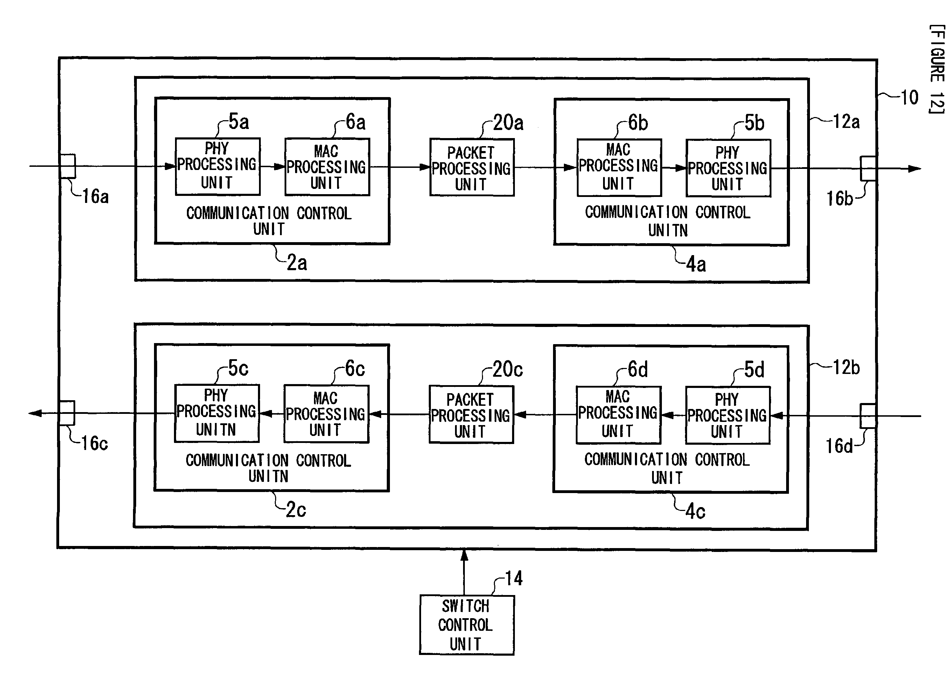

FIG. 12 shows another illustrative configuration of the communication control apparatus in the base technology. The communication control apparatus 10 shown in this diagram has two communication control units 12, each of which has the same configuration as the communication control apparatus 10 shown in FIG. 3. There is also provided a switch control unit 14 for controlling the operation of the individual communication control units 12. Each of the communication control units 12 has two input/output interfaces 16 and is connected to two networks, upstream and downstream, via the respective input/output interfaces 16. The communication control units 12 receive communication data from either one of the networks and output processed data to the other. The switch control unit 14 switches the inputs and outputs of the input/output interfaces 16 provided for the individual communication control units 12, thereby switching the directions of the flow of communication data in the communication control units 12. This allows communication control not only in one direction but also in both directions.

The switch control unit 14 may provide control such that: either one of the communication control units 12 processes inbound packets and the other processes outbound packets; both the units process inbound packets; or both the units process outbound packets. Consequently, the directions of communications to control can be changed depending on, for example, the traffic status or intended purpose.

The switch control unit 14 may acquire the operation status of the respective communication control units 12 and may switch the direction of communication control according thereto. For example, when one of the communication control units 12 is in a standby state and the other communication control unit 12 is in operation, the unit on standby may be activated as a substitute upon detection of the unit in operation stopping due to a failure or other reasons. This can improve the fault tolerance of the communication control apparatus 10. Also when one of the communication control units 12 needs maintenance such as a database update, the other communication control unit 12 may be operated as a substitute. Thus, appropriate maintenance can be performed without halting the operation of the communication control apparatus 10.

The communication control apparatus 10 may be provided with three or more communication control units 12. The switch control unit 14 may, for example, acquire the traffic status to control the direction of communications in the respective communication control units 12 so that more communication control units 12 are allocated for communication control processing in a direction handling higher traffic. This minimizes a drop in the communication speed, even when the traffic increases in one direction.

The plurality of communication control units 12 may share a part of the communication control unit 2 or 4. The units may also share a part of the packet processing circuit 20, too.

For the data processing apparatus stated above, the following aspects may be provided.

### [Aspect 1]

A data processing apparatus comprising:
a first memory unit which contains reference data to be referred to when determining contents of processing to be performed on acquired data;
a search section which searches the data for the reference data by comparing the data and the reference data;
a second memory unit which stores a result of search obtained by the search section and the contents of processing in association with each other; and
a processing section which performs the processing associated with the result of search on the data, based on the result of search, wherein
the search section is composed of a wired logic circuit.

### [Aspect 2]

The data processing apparatus of Aspect 1, wherein the wired logic circuit includes a plurality of first comparison circuits which compare the data with the reference data bit by bit.

### [Aspect 3]

The data processing apparatus of Aspect 1, wherein the search section includes a position detection circuit which detects in the data a position of comparison target data to be compared with the reference data.

### [Aspect 4]

The data processing apparatus of Aspect 3, wherein the position detection circuit includes a plurality of second comparison circuits which compare the data with position identification data for identifying the position of the comparison target data, and wherein the plurality of second comparison circuits receive the data, each having a shift of a predetermined data length, and compare the data with the position identification data simultaneously in parallel.

### [Aspect 5]

The data processing apparatus of Aspect 1 or 2, wherein the search section includes a binary search circuit which searches the data for the reference data by binary search.

### [Aspect 6]

The data processing apparatus of Aspect 5, wherein, when the number of pieces of the reference data is smaller than the number of pieces of data storable in the first memory unit, the reference data is stored in the first memory unit in descending order from the last data position, while 0 is stored in the rest of the data.

### [Aspect 7]

The data processing apparatus of any one of Aspects 1 to 6, wherein the search section includes a determination circuit which determines which range the comparison target data to be compared with the reference data pertains to, out of three or more ranges into which the plurality of pieces of reference data stored in the first memory unit are divided.

### [Aspect 8]

The data processing apparatus of Aspect 7, wherein the determination circuit include a plurality of third comparison circuits which compare reference data at borders of the ranges with the comparison target data so that the plurality of third comparison circuits determine which of the three or more ranges the comparison target data pertains to simultaneously in parallel.

### [Aspect 9]

The data processing apparatus of Aspect 8, wherein the reference data stored in predetermined positions of the first memory unit is input to the third comparison circuits as the reference data at the borders.

### [Aspect 10]

The data processing apparatus of Aspect 7 or 8, wherein the ranges are determined depending on a distribution of frequencies of occurrence of the reference data in the data.

### [Aspect 11]

The data processing apparatus of any one of Aspects 1 to 10, wherein the first memory unit further contains information that indicates the position of the comparison target data in the data, and wherein the search section extracts the comparison target data based on the position-indicating information.

### [Aspect 12]

The data processing apparatus of any one of Aspects 1 to 11, wherein the first memory unit or the second memory unit is configured to be rewritable from the outside.

### [Aspect 13]

The data processing apparatus of any one of Aspects 1 to 12, wherein, when the search section acquires data in a communication packet to be compared with the reference data, the search section starts comparing the data and the reference data without waiting for the acquisition of all data of the communication packet.

### [Aspect 14]

A data processing apparatus comprising a plurality of the data processing apparatuses of any one of Aspects 1 to 13, wherein the data processing apparatuses each have two interfaces which input and output data from/to communication lines, and the direction of processing of the data is changeably controlled by switching the inputs and outputs of the respective interfaces.

Next, a URL filtering technique using the communication control apparatus 10 discussed above will be described.

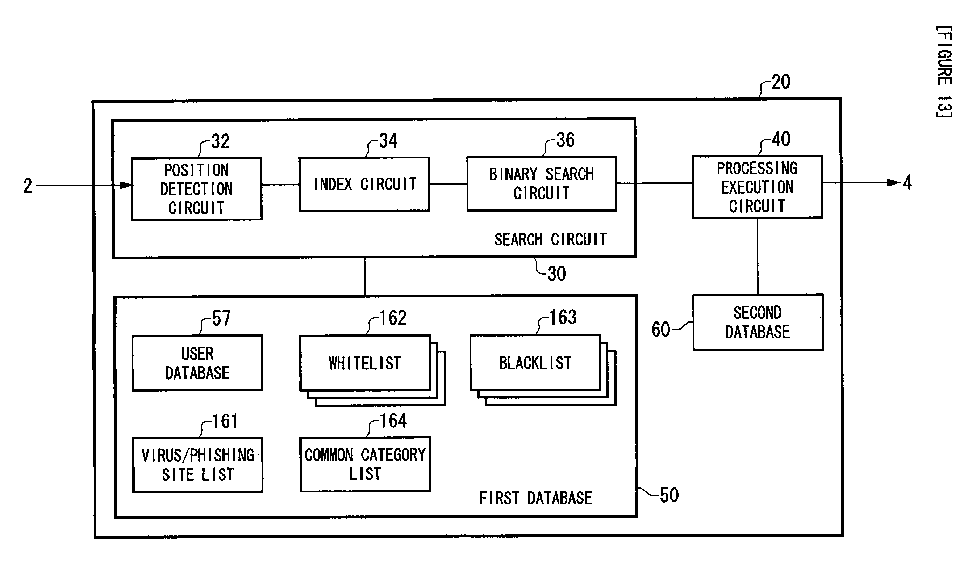

FIG. 13 shows an internal configuration of the packet processing circuit 20 used for URL filtering. The packet processing circuit 20 comprises, as the first database 50, a user database 57, a virus/phishing site list 161, a whitelist 162, a blacklist 163 and a common category list 164. The user database 57 stores information on users who use the communication control apparatus 10. The communication control apparatus 10 receives, from a user, information for identifying the user, and performs matching between the information received by the search circuit 30 therein and the user database 57 to authenticate the user. For the user-identifying information, a source address stored in the IP header of a TCP/IP packet, or a user ID and a password provided by a user may be used. In the former case, storage location of a source address in a packet is already known. Accordingly, when the search circuit 30 performs matching with the user database 57, the position detection circuit 32 needs not to detect the position, and the only thing required there is to specify, as the offset 51, the storage location of the source address. After the user is authenticated as a user registered in the user database 57, the URL of a content is checked against the virus/phishing site list 161, whitelist 162, blacklist 163 and common category list 164, in order to determine whether or not the access to the content should be permitted. The whitelist 162 and blacklist 163 are provided for each user, and when a user ID is uniquely specified after the user authentication, the whitelist 162 and blacklist 163 for the user is provided to the search circuit 30.

The virus/phishing site list 161 contains a list of URLs of contents containing computer viruses, and a list of URLs of "trap" sites used for phishing. If a URL is contained in the virus/phishing site list 161, the request for access to the content having such URL will be denied. Therefore, even when a user is about to access, unconsciously or by a trick, a virus site or phishing site, the access can be appropriately prohibited, thereby protecting the user from a virus or phishing fraud. Also, since the access restrictions are collectively provided by the communication control apparatus 10 on a communication path, not by a user terminal with a list of virus sites or phishing sites stored therein, more reliable and efficient access restrictions can be achieved. The communication control apparatus 10 may acquire and maintain a list of authenticated sites, which have been certified by certification authorities as valid and as not virus sites or phishing sites, to permit access to URLs contained in the list. Also, in a case where a valid website is hacked and a virus is embedded therein or the valid site is used for phishing, the operator of the valid site may register the URL of such hacked website in the virus/phishing site list 161, so as to temporarily prohibit the access to the website until the website is recovered. In addition to the URL list, other information such as IP numbers, TCP numbers and MAC addresses may be checked in combination. Accordingly, prohibition conditions can be set more accurately, thereby ensuring the filtering of virus sites or phishing sites.

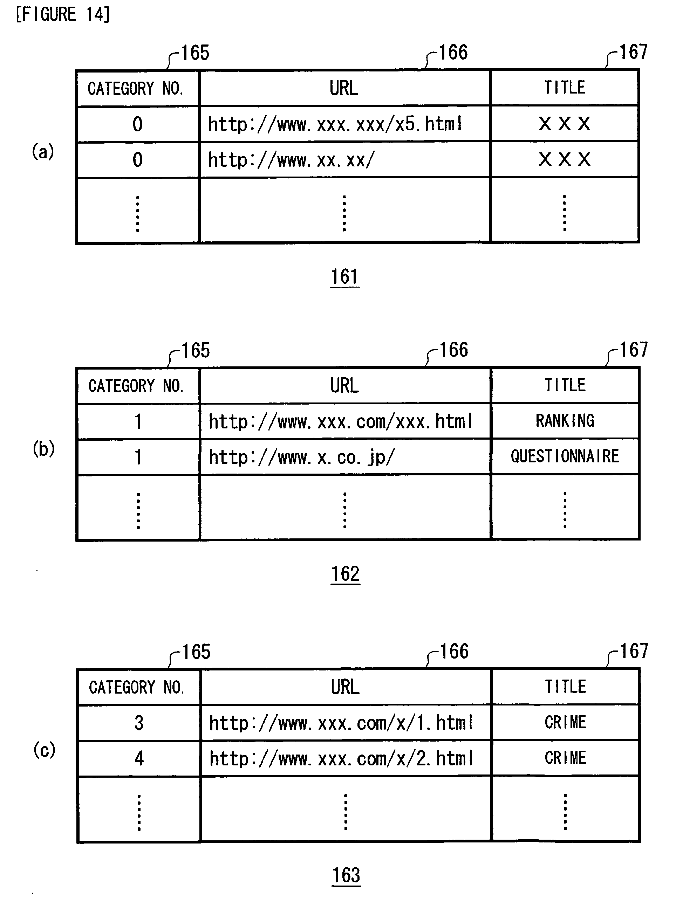

The whitelist 162 is provided for each user and contains a list of URLs of contents to which access is permitted. The blacklist 163 is also provided for each user but contains a list of URLs of contents to which access is prohibited. FIG. 14A shows an example of internal data of the virus/phishing site list 161. Similarly, FIG. 14B shows an example of internal data of the whitelist 162, and FIG. 14C shows that of the blacklist 163. Each of the virus/phishing site list 161, whitelist 162 and blacklist 163 contains a category number field 165, a URL field 166 and a title field 167. The URL field 166 contains a URL of a content to which access is permitted or prohibited. The category number field 165 contains a category number of a content. The title field 167 contains a title of a content.

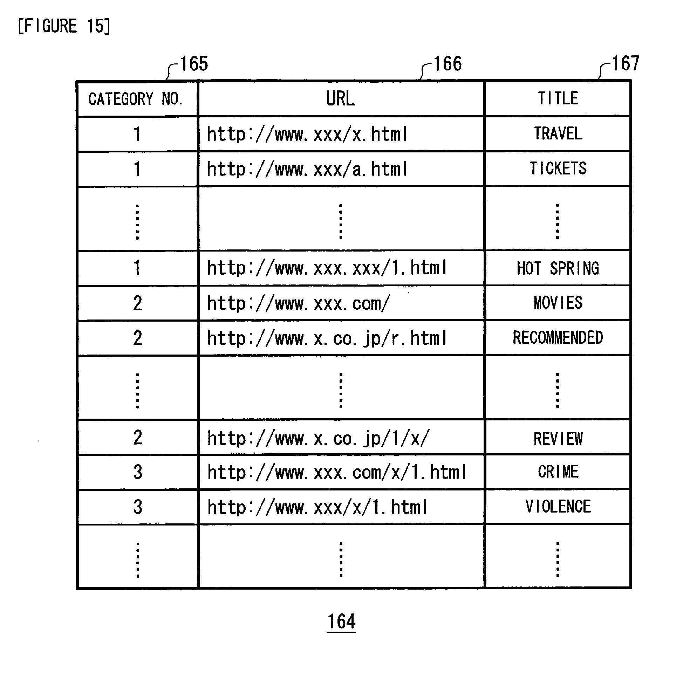

The common category list 164 contains a list for classifying contents represented by URLs into multiple categories. FIG. 15 shows an example of internal data of the common category list 164. The common category list 164 also contains the category number field 165, URL field 166 and title field 167.

The communication control apparatus 10 extracts a URL included in a "GET" request message or the like and searches the virus/phishing site list 161, whitelist 162, blacklist 163 and common category list 164 for the URL using the search circuit 30. At this time, a character string "http://", for example, may be detected by the position detection circuit 32 so as to extract the subsequent data string as target data. Then, the index circuit 34 and binary search circuit 36 perform matching between the extracted URL and the reference data in the virus/phishing site list 161, whitelist 162, blacklist 163 and common category list 164.

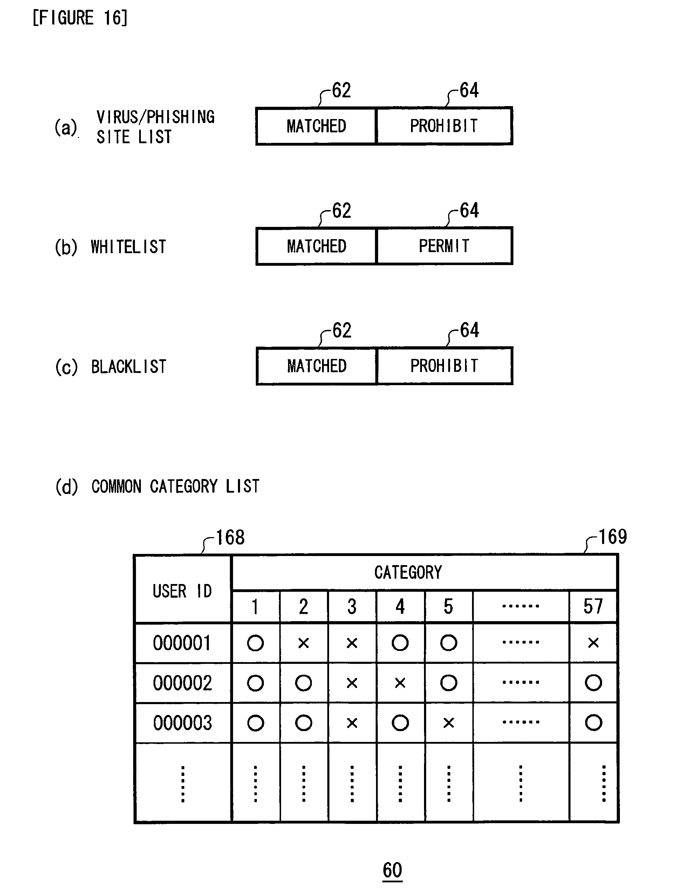

FIGS. 16A, 16B, 16C and 16D show examples of internal data of the second database 60 used for URL filtering. FIG. 16A shows the search result and processing content with respect to the virus/phishing site list 161. If a URL included in a GET request or the like matches a URL included in the virus/phishing site list 161, the access to the URL will be prohibited. FIG. 16B shows the search result and processing content with respect to the whitelist 162. If a URL included in a GET request or the like matches a URL included in the whitelist 162, the access to the URL will be permitted. FIG. 16C shows the search result and processing content with respect to the blacklist 163. If a URL included in a GET request or the like matches a URL included in the blacklist 163, the access to the URL will be prohibited.

FIG. 16D shows the search result and processing content with respect to the common category list 164. As shown in FIG. 16D, a user can determine, with respect to each of the categories, the permission or prohibition of the access to contents belonging to the category, in relation to the results of search through the common category list 164. The second database 60 for the common category list 164 contains a user ID field 168 and a category field 169. The user ID field 168 contains an ID for identifying a user. The category field 169 contains information that indicates the permission or prohibition of the access to contents belonging to respective categories, which is determined by a user for each of 57 categories classified. If a URL included in a GET request or the like matches a URL included in the common category list 164, the permission for the access to the URL will be determined according to the category that the URL belongs to and the user ID. Although the number of common categories is 57 in FIG. 16D, it is not limited thereto.

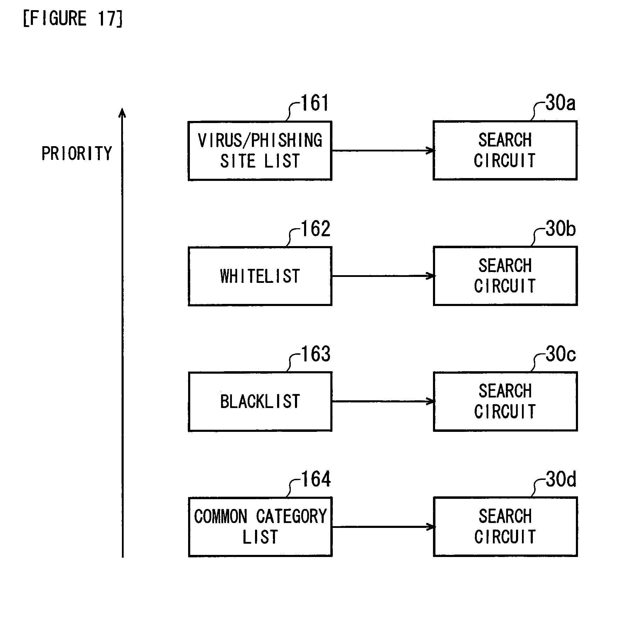

FIG. 17 shows the priorities of the virus/phishing site list 161, whitelist 162, blacklist 163 and common category list 164. In the base technology, the virus/phishing site list 161, whitelist 162, blacklist 163 and common category list 164 have higher priorities in this order. For example, even though a URL of a content appears in the whitelist 162 and the access thereto is permitted, the access will be prohibited if the URL also appears in the virus/phishing site list 161, as it is determined that the content contains a computer virus or is used for phishing.

When conventional software-based matching is performed in consideration of such priorities, the matching is performed on the lists, for example, in descending order of priority and the first match is employed. Alternatively, the matching is performed on lists in ascending order of priority, and the latest match is employed to replace the preceding match. In the base technology using the communication control apparatus 10 configured with a dedicated hardware circuit, in contrast, there are provided a search circuit 30a for performing matching with respect to the virus/phishing site list 161, a search circuit 30b for performing matching with respect to the whitelist 162, a search circuit 30c for performing matching with respect to the blacklist 163, and a search circuit 30d for performing matching with respect to the common category list 164; these search circuits 30 perform matching simultaneously in parallel. When matches are found in multiple lists, the one with the highest priority is employed. Thus, even when multiple databases are provided and the priorities thereof are defined, the search time can be reduced remarkably.

The priorities of the virus/phishing site list 161, whitelist 162, blacklist 163 and common category list 164, with which the permission of access is determined, may be provided in the second database 60, for example. The conditions in the second database 60 may be modified depending on the priorities of the lists.

Therefore, when performing filtering based on URLs using multiple databases, by defining priorities of the databases to perform filtering according thereto, and also by providing the highest priority to the filtering in the virus/phishing site list 161, access to a virus site or phishing site can be certainly prohibited, irrespective of the conditions in the whitelist 162 or the like defined by the user. This can appropriately protect users from viruses or phishing fraud.

When access to a content is permitted, the process execution circuit 40 outputs a signal to the message output server 130 to convey the permission. The message output server 130 then transmits a "GET" request message to the server retaining the content. When access to a content is prohibited, the process execution circuit 40 outputs a signal to the message output server 130 to convey the prohibition, and the message output server 130 then discards a "GET" request message for the server of access destination without transmitting it. At this time, a response message conveying the prohibition of the access may be transmitted to the request source. Alternatively, transfer to another web page may be forced. In this case, the process execution circuit 40 changes the destination address and URL to those of the transfer destination and transmits the "GET" request message. Information including such response message or URL of the transfer destination may be stored in the second database 60 or message output server 130.

The message output server 130 may confirm that the request source exists using a ping command or the like, and may subsequently check the condition of the request source before outputting a message thereto. A message transmitted from the message output server 130 to the request source may be determined for each user, for each content or each category of contents to be accessed, or for each database such as the whitelist 162 or blacklist 163. For example, the screen displayed when access is prohibited may be customized by a user and registered in the message output server 130. Also, as stated previously, when a valid website is hacked and the access thereto is temporarily restricted, a message may be output in order to direct users to a mirror site of the valid site.

The message output server 130 may manage the history of message transmission so that the history information may be used for various kinds of control. For example, when a number of access requests are transmitted from the same request source for a short time, since it may possibly be a denial-of-service attack (DoS attack), such request source may be registered in an access denial list so as to block packets from the request source without transmitting them to the request destination. Also, the history of message transmission may be statistically processed to be provided to the operator of the website, etc. Accordingly, the history of user access can be used for marketing, control of communication status or other purposes. The number of message transmission may be decreased or increased depending on the situation. For example, when an access request is transmitted from a certain IP number, messages to be transmitted can be increased manyfold in response to the single request message.

With the configuration and operation as described above, access to an inappropriate content can be prohibited. Also, since the search circuit 30 is a dedicated hardware circuit configured with FPGA, etc., high-speed search processing can be achieved, as discussed previously, and filtering process can be performed with minimal effect on the traffic. By providing such filtering service, an Internet service provider can provide added value, thus gaining more users.

The whitelist 162 or blacklist 163 may be mutually provided for all users.

### (Embodiment)

The embodiment proposes a technique for outputting a message to a source of access request. The embodiment also proposes a business model using such message. Further, the embodiment proposes a technique for using such message to provide appropriate defensive measures against malicious attacks.

As described in the base technology, the communication control apparatus 10 receives a packet for requesting access to a content and determines whether or not the access should be permitted. If the access is prohibited, the communication control apparatus 10 will instruct the message output server 130 to output a message such as an error message. In the present embodiment, the message that the message output server 130 outputs to an access request source can be flexibly set for each user of access request source, for each URL or each category of contents to be accessed, or for each database, so that an appropriate message can be output depending on the situation. Besides the case where access is prohibited, contents and messages may be related and retained so that a message related to a content is output to a user who has sent a request for access to the content.

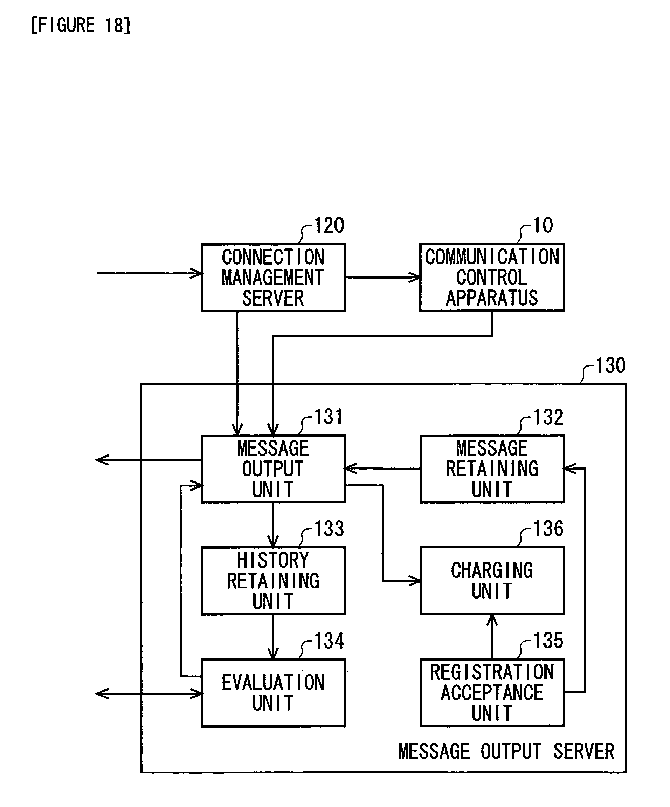

FIG. 18 shows a configuration of the message output server 130 according to the embodiment. The message output server 130 of the present embodiment comprises a message output unit 131, a message retaining unit 132, a history retaining unit 133, an evaluation unit 134, a registration acceptance unit 135 and a charging unit 136.

The message retaining unit 132 retains a message to be output to an access request source. The message may be determined for each user. In such case, the message retaining unit 132 relates, to information for identifying a user, a message to be output to the user or the name of a file storing the message, and stores them. The message may be set for each category in the category list, or for each URL to be accessed. For example, a website operator may set advertisement information or the like as a message for each URL. When messages can be set according to multiple conditions, such as for each user and each URL, the message retaining unit 132 may further store information that specifies the priorities of the messages.

The registration acceptance unit 135 accepts registration of messages. When the message can be set for each user, the registration acceptance unit 135 accepts message registration from a user and registers the message in the message retaining unit 132. The message registration may also be made by a content provider or an advertisement providing service. If a registration fee is charged to a registrant of a message, the registration acceptance unit 135 will instruct the charging unit 136 to charge the fee upon acceptance of the message registration. The charging unit 136 will then perform processing for deducting the registration fee from the registrant's account.

When the message is set for each user of access request source, the message output unit 131 acquires the user ID or the like of a user who has sent an access request, from the connection management server 120 or the communication control apparatus 10, which process a packet for access request. The message output unit 131 then refers to the message retaining unit 132 to output a message set for the user. When the message is set for each URL or each category of contents to be accessed, the message output unit 131 acquires, from the communication control apparatus 10, identification information or the like for identifying the URL or category of a content to be accessed, and refers to the message retaining unit 132 to output a message set for the URL or category. The message output unit 131 registers the history of the message output in the history retaining unit 133. Also, if a fee for the message output is charged to the registrant or recipient of the message, the message output unit 131 will instruct the charging unit 136 to charge the fee.

When the message is set for each list in the first database 50, the reason for the access prohibition can be output as a message to a user who has requested access to a URL registered in the virus/phishing site list 161, such as "the access is prohibited as it is a virus-infected site" or "the access is prohibited as it is a phishing site". Also when the message is set for each category in the common category list 164, the reason for the access prohibition can be output as a message, such as "the access is prohibited as the website belongs to a view-prohibited category". The same method can be also applied when the message is set for each URL registered in the respective lists.

For example, when access privileges are determined according to the positions or the likes in a company, and the message is set for each user of access request source, a message such as "you are not authorized to access this site" can be output. Also, when parents give a cellular phone to their child, and when the child is about to access an inappropriate website, a message containing a link to another healthy or quality website may be output so as to direct the child thereto.

A message containing advertisement or the like may be set for each category or each URL of contents to be accessed. For example, advertisement associated with the site content may be included in the message. This can provide a user with advertisement associated with a website that the user is to view, thereby increasing the advertising effect. Such message containing advertisement or the like may also be set for each user. For example, a message for a user may contain information such as advertisement or the like belonging to an area, which is set in advance as an area of interest by the user.

A message may contain a link to another website. For example, a link to a website such as a site providing advertisement, a site associated with the content to be accessed, a site ranked high as a popular site, or a secure site certified by a certificate authority, may be included. In a case where a valid site is hacked and closed, a message containing a link to a mirror site may be output to a user intending to access the valid site. Also, when a URL of a website is changed, a message containing a link to the new URL may be output to a user intending to access the old URL. The message output unit 131 may extract highly relevant sites, popular sites, quality sites, or sites certified by certificate authorities, from among websites associated with the content to be accessed, so as to create a list and include it in a message.

The evaluation unit 134 refers to the history of message output retained by the history retaining unit 133 to evaluate the communication status or the condition of the access request source. The evaluation unit 134 may statistically process the history of message transmission to provide it to the operator of a website, etc. Accordingly, the history of user access can be used for marketing, control of communication status or other purposes. Also, a user terminal may be set to transmit an access request regularly, and the history of message transmission executed in response thereto may be referred to, so as to understand user action history or the like, which may be used later.

When a number of access requests are transmitted from the same request source for a short time, the evaluation unit 134 may determine that it is possibly a denial-of-service attack (DoS attack) and may register such request source in an access denial list so as to block packets from the request source without transmitting them to the request destinations. In such case, the evaluation unit 134 may confirm that the request source exists using a ping command or the like and may subsequently check the condition of the request source. When a request source transmitting inadequate access requests in a DoS attack or the like is identified, the message output unit 131 may output a message to the request source. The communication control apparatus 10 of the present embodiment cannot be attacked because it is a communication apparatus of completely transparent type with no OS or CPU, as stated previously, and has no IP address. Conversely, the communication control apparatus 10 may burden the attacker's machine by allowing the message output server 130 to "return" a message to the attacker. In such case, the communication control system 100 does not pass inadequate access requests and gives messages in return, functioning as a mirror in a sense. Multiple messages may be transmitted in response to a single access request.

The communication control system 100 of the present embodiment is provided on a communication path connecting a user terminal, which transmits an access request, and an apparatus of access destination. In the following, illustrative arrangements of the communication control system 100 will be cited.

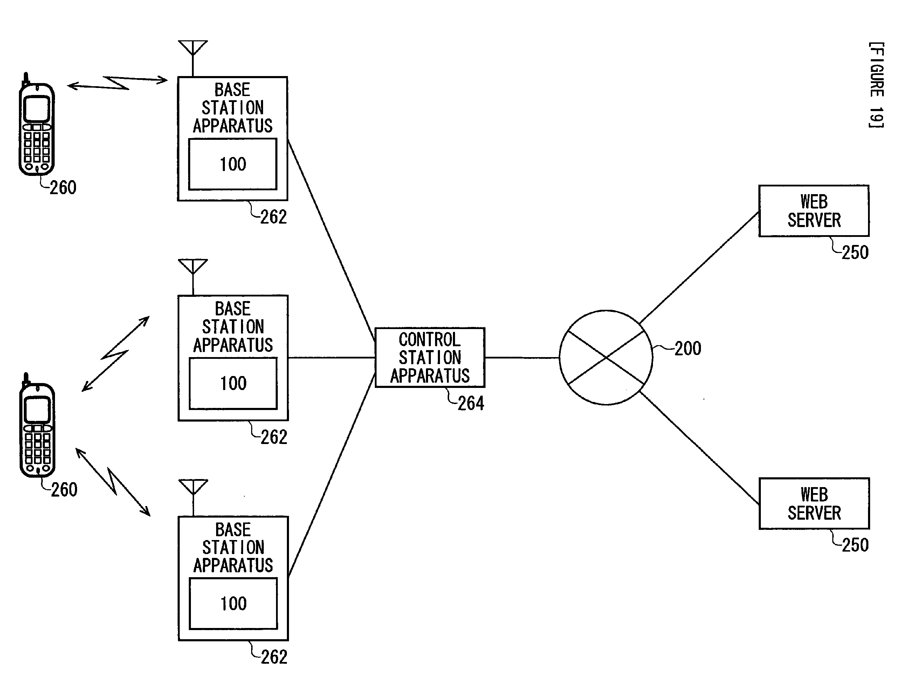

FIG. 19 shows an illustrative arrangement of the communication control system. This diagram shows an example in which cellular phone terminals 260 are used as user terminals. An access request is transmitted from a cellular phone terminal 260, via a base station apparatus 262 provided by a carrier and a control station apparatus 264 installed in a central office, to the Internet 200 and then reaches a web server 250. In the example of FIG. 19, the communication control system 100 is provided in the base station apparatus 262. In this case, a message in the message retaining unit 132 may be varied for each base station apparatus 262 so that a different message is output to an area covered by each base station apparatus 262. When the communication control system 100 is provided in the base station apparatus 262, the system may be miniaturized by installing only minimum required functions therein. For example, a configuration corresponding to the connection management server 120 or log management server 140 may be excluded. By providing the communication control system 100 in the base station apparatus 262, the communication control processing can be distributed, and hence, the communication control system 100 can be made smaller. Consequently, the miniaturization, weight saving, and cost reduction of the apparatus can be achieved. Also, when an access request is transmitted from a cellular phone terminal 260, a message can be transmitted to the request source before the access request is transmitted to the control station apparatus 264, thereby reducing the traffic. Further, since a message is transmitted from the base station apparatus 262 which directly communicates with a cellular phone terminal 260, the message can be delivered to the cellular phone terminal 260 more certainly and promptly.

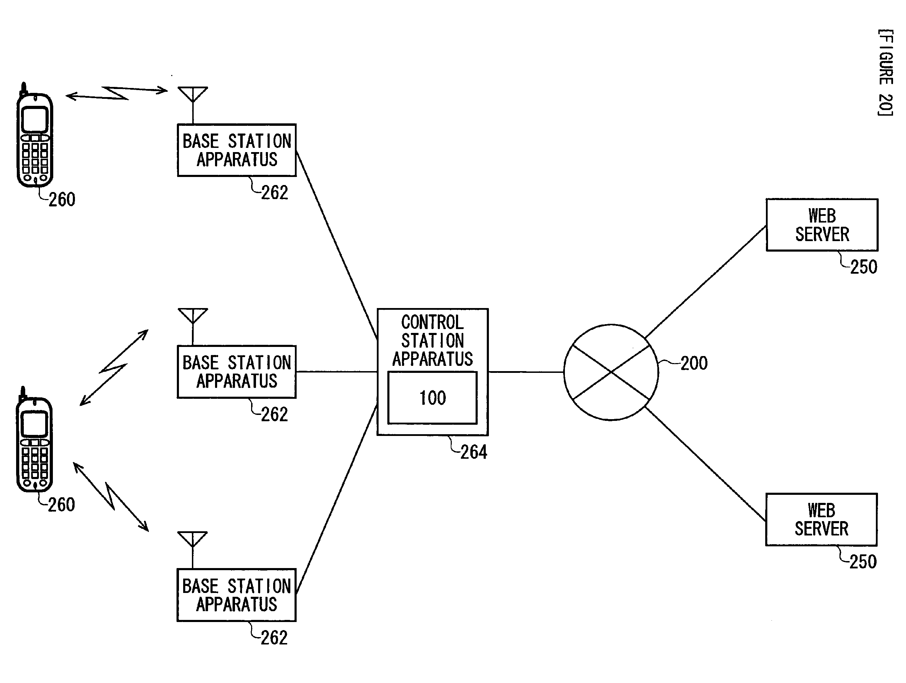

FIG. 20 shows another illustrative arrangement of the communication control system. This diagram also shows an example in which cellular phone terminals 260 are used but, unlike the example shown in FIG. 19, the communication control system 100 is provided in the control station apparatus 264. Since messages are collectively processed by the control station apparatus 264 installed in the central office, system maintenance can be facilitated.

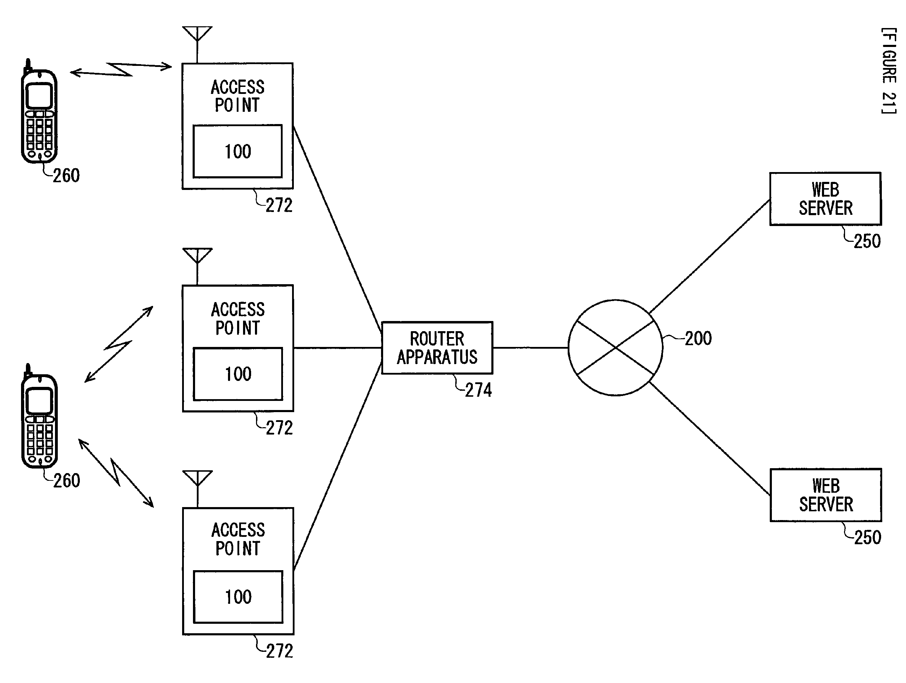

FIG. 21 shows yet another illustrative arrangement of the communication control system. Also in the example of this diagram, cellular phone terminals 260 are used as user terminals. An access request is transmitted from a cellular phone terminal 260, via an access point 272 in a wireless LAN and a router apparatus 274, to the Internet 200 and then reaches a web server 250. In the example of FIG. 21, the communication control system 100 is provided in the access point 272. Accordingly, as with the example shown in FIG. 19, message processing is performed by an apparatus near the cellular phone terminal 260, thereby reducing unnecessary communications. In a wireless LAN within a company, for example, suitable communication control can be performed for each of the access points 272, such as prohibiting employees' access to inappropriate websites during working hours.

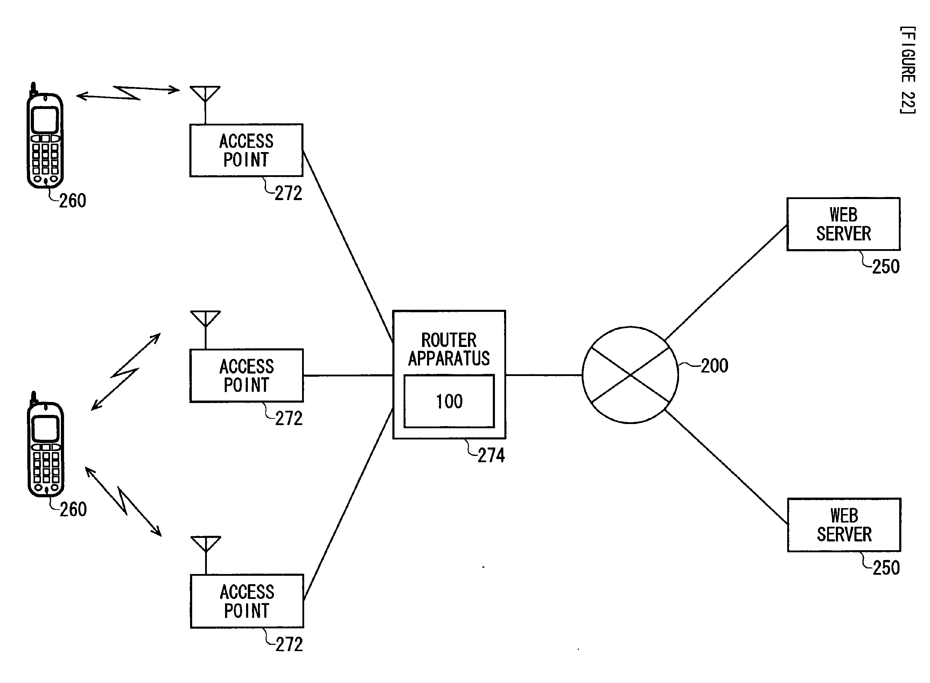

FIG. 22 shows still yet another illustrative arrangement of the communication control system. This diagram also shows an example of a wireless LAN but, unlike the example shown in FIG. 21, the communication control system 100 is provided in the router apparatus 274. By providing the communication control system 100 in the router apparatus 274, the number of the communication control systems 100 to be installed can be decreased, and hence, maintenance can be facilitated.

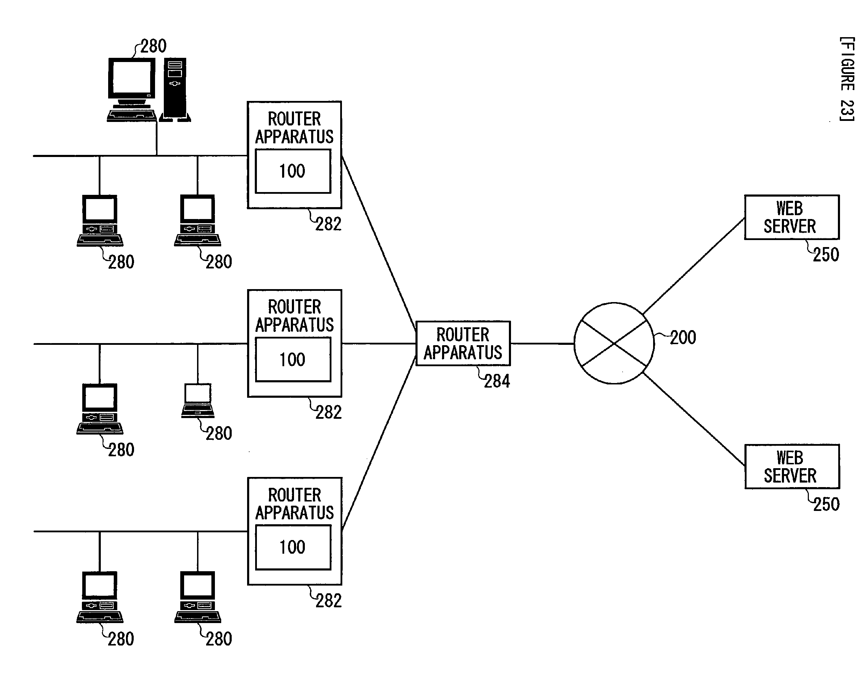

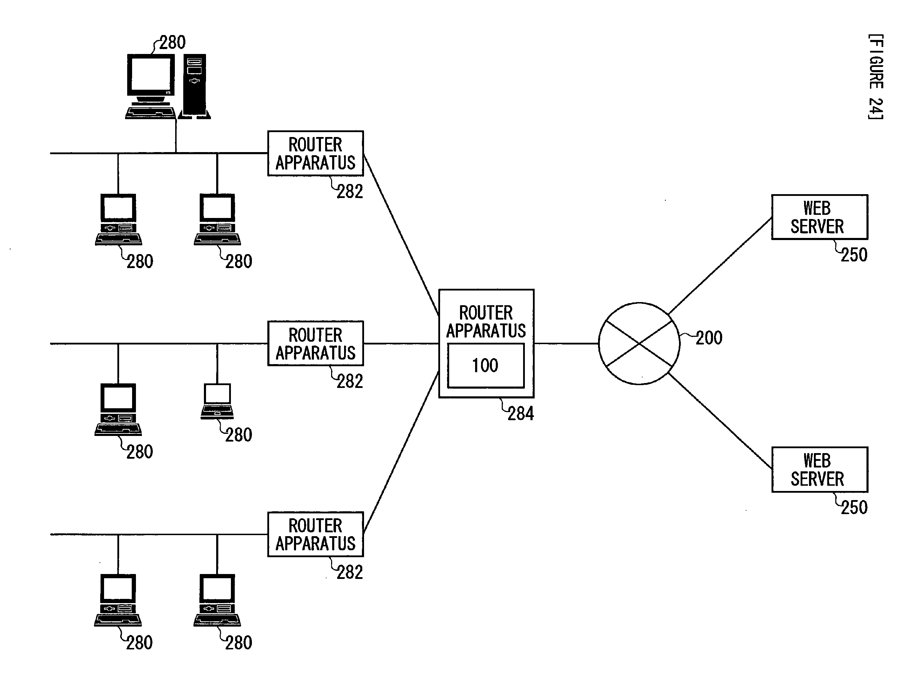

FIGS. 23 and 24 show further illustrative arrangements of the communication control system. These diagrams show examples in which personal computers (PCs) 280 are used as user terminals. An access request is transmitted from a PC 280, via router apparatuses 282 and 284 in a LAN, to the Internet 200 and then reaches a web server 250. FIG. 23 shows an example in which the communication control system 100 is provided in the router apparatus 282, while FIG. 24 shows an example in which the communication control system 100 is provided in the router apparatus 284.

Although the examples cited above show examples in which the communication control system 100 is built into apparatuses constituting a network, the communication control system 100 may be provided in any position in a network besides these apparatuses.

In the illustrative arrangements cited above, messages may be output without determining the need for access control of communication data received by a receiving unit, such as an antenna of the base station apparatus 262 or access point 272, or a network interface of the control station apparatus 264 or router apparatus 274, 282 or 284. Also, messages may be output without authenticating the user of the request source as a user registered in the user database 57. In fact, the communication control system 100 may acquire all packets passing through and may output messages to the originators of the packets. On the other hand, messages may be output only to users authenticated by the connection management server 120 or users registered in the user database 57, as described in the base technology.

The present invention has been described with reference to the embodiment. The embodiment is intended to be illustrative only and it will be obvious to those skilled in the art that various modifications to constituting elements or processes could be developed and that such modifications are also within the scope of the present invention.

### [Industrial Applicability]

The present invention is applicable to a communication control system that controls access to contents.

## Claims

1. A communication control apparatus, comprising:
a message retaining unit which relates and stores an address of a content or a service stored in a position accessible via a network, and a message to be output to a request source which requests access to the content or service;
a search unit which acquires communication data for requesting access to the content or service and searches the communication data for the address; and
a message output unit which, when the address is included in the communication data, retrieves a message related to the address from the message retaining unit and outputs the message.

2. The communication control apparatus of claim 1, wherein the message retaining unit relates and stores an address of a content or a service to which access is prohibited or permitted, and a message to be output to a request source which requests access to the content or service.

3. The communication control apparatus of claim 1 or 2, wherein the message retaining unit classifies the content or service as one of multiple categories, and retains, with respect to each of the categories, a message to be output to a request source which requests access to a content or service belonging to the category.

4. The communication control apparatus of any one of claims 1 through 3, further comprising a user database which stores information for identifying a user, wherein:
the search unit compares information, included in the communication data, for specifying the originator of the communication data, with information for identifying the user registered in the user database, in order to search the user database for the originator; and
the message output unit outputs the message when the originator is a user registered in the user database.

5. The communication control apparatus of claim 4, wherein the message retaining unit retains, with respect to each of the users, a message which is output when the user requests access to the content or service.

6. The communication control apparatus of any one of claims 1 through 5, further comprising:
a registration acceptance unit which accepts registration of the message and registers the message in the message retaining unit; and
a charging unit which charges a fee in consideration of the registration of the message.

7. The communication control apparatus of claim 6, wherein the charging unit charges a fee to the request source or request destination of the access, upon the message output unit outputting a message.

8. The communication control apparatus of any one of claims 1 through 7, further comprising:
a history retaining unit which retains a history of output of the message; and
an evaluation unit which evaluates a history of message output retained in the history retaining unit.

9. The communication control apparatus of claim 8, wherein, when the number of access requests transmitted from the same access request source exceeds a predetermined number, the evaluation unit identifies the access request source and instructs the message output unit to output a message to the access request source.

10. The communication control apparatus of any one of claims 1 through 9, further comprising an antenna for transmitting to or receiving from a mobile communication terminal a signal via wireless communication, wherein the communication data is received from the mobile communication terminal via the antenna, and the message is transmitted to the mobile communication terminal via the antenna.
